**Europäisches Patentamt**

**European Patent Office**

**Office européen des brevets**

(11) Numéro de publication : **0 253 713 B1**

# (12) FASCICULE DE BREVET EUROPEEN

(45) Date de publication du fascicule du brevet :
**20.09.95 Bulletin 95/38**

(51) Int. Cl.$^6$ : **G02F 1/17**

(21) Numéro de dépôt : **87401555.5**

(22) Date de dépôt : **02.07.87**

(54) **Vitrage à transmission variable du type électrochrome.**

(30) Priorité : **04.07.86 FR 8609733**

(43) Date de publication de la demande :
**20.01.88 Bulletin 88/03**

(45) Mention de la délivrance du brevet :
**20.09.95 Bulletin 95/38**

(84) Etats contractants désignés :
**AT BE CH DE ES FR GB IT LI LU NL SE**

(56) Documents cités :
**EP-A- 0 001 955
EP-A- 0 028 147
GB-A- 2 005 856
US-A- 3 708 220
US-A- 4 573 768
PROCEEDINGS OF THE SID, vol. 23, no. 1, 1982, pages 41-45, Los Angeles, California, US; R.D. GIGLIA et al.: "Performance improvements in WO3-based electrochromic displays"
THIN SOLID FILMS, vol. 121, no. 4, octobre 1984, pages 275-282, Elsevier Sequoia, Lausanne, CH; W. SIEFERT: "Properties of thin In2O3 and SnO2 films prepared by corona spray pyrolysis, and a discussion of the spray pyrolysis process"**

(73) Titulaire : **SAINT-GOBAIN VITRAGE
18, avenue d'Alsace
F-92400 Courbevoie (FR)**

(72) Inventeur : **Arribart, Hervé
4, Allée des Iles
F-95230 Soisy-Sous-Montmorency (FR)**
Inventeur : **Padoy, Christian
28, rue Camille Saint-Saens
F-95500 Gonesse (FR)**
Inventeur : **Dugast, Alain
107, rue Bobillot
F-75013 Paris (FR)**
Inventeur : **Armand, Michel
"Les Corjons"
F-38410 St-Martin d'Heres (FR)**
Inventeur : **Dependinis, Francis
90 A Cours de la Libération
F-38100 Grenoble (FR)**
Inventeur : **Desbat, Bernard
76 ter, Av. Nancel Pélard
F-33600 Pessac (FR)**

(74) Mandataire : **Leconte, Jean-Gérard et al
Saint-Gobain Recherche
39, Quai Lucien Lefranc
F-93304 Aubervilliers Cedex (FR)**

## Description

La présente invention a pour objet un vitrage à transmission variable du type électrochrome ainsi qu'un procédé d'obtention de celui-ci. Plus précisément, l'invention concerne des vitrages à transmission variable comportant une couche de matériau électrochrome montée entre deux plaques de verre.

Depuis de nombreuses années, se pose le problème de l'opacification réversible des vitrages afin de contrôler l'intensité du rayonnement lumineux les traversant. Ainsi des verres photochromes sont couramment commercialisés, notamment pour la fabrication de verres correcteurs. Ces verres photochromes s'opacifient au moins partiellement sous l'effet du rayonnement ultraviolet ; toutefois, ces systèmes peuvent être qualifiés de passifs en ce sens que l'utilisateur du vitrage ne peut pas contrôler l'opacification volontairement. De plus, ces vitrages ne peuvent évidemment pas s'opacifier en période de faible rayonnement lumineux, telle que la nuit et donc ne peuvent pas assurer toutes les fonctions usuelles d'un store.

Pour résoudre ce problème d'obtention d'un vitrage à transmission variable "dynamique", c'est-à-dire dont l'opacification peut être contrôlée à tout moment par l'utilisateur, la demanderesse a étudié les systèmes du type électrochrome dont l'apparition - ou le changement de la couleur - est obtenue sous l'action d'un courant électrique.

Des systèmes du type électrochrome ont été proposés pour utiliser soit leurs propriétés électriques, par exemple dans des batteries, soit pour leurs propriétés optiques ce dont il est ici plus spécialement l'objet. Dans ce dernier cas, les systèmes fonctionnent soit en réflexion, et il s'agit alors essentiellement de miroirs et de dispositifs d'affichage alphanumérique soit en transmission, vitrages de bâtiments par exemple. Il doit être noté que si dans une première approche, les systèmes fonctionnant en réflexion ou en transmission sont très semblables, des exigences beaucoup plus rigoureuses sont requises pour les systèmes fonctionnant en transmission, exigences détaillées dans la suite de ce mémoire et qui n'ont pas permis actuellement de réalisation pratique même au stade semi-industriel. Dans ce qui suit, nous nous intéresserons principalement aux systèmes électrochromes fonctionnant en transmission, étant entendu que rien ne s'oppose à ce que les mêmes matériaux et les mêmes procédés soient utilisés pour des systèmes fonctionnant en réflexion.

De tels systèmes électrochromes sont essentiellement constitués par deux plaques support par exemple en verre revêtues d'un dépôt électroconducteur servant d'électrode et séparées par au moins une couche de matériau électrochromique et une couche d'électrolyte. Le matériau électrochromique le plus fréquemment employé est l'oxyde de tungstène $WO_3$ incolore et qui prend une coloration bleu-nuit en présence d'ions notamment de protons. D'autres matériaux électrochromiques, notamment à base d'oxyde d'iridium permettent l'obtention de couleurs différentes.

Pour la couche électrolyte, qui dans le cas d'une couche électrochromique à base d'oxyde de tungstène constitue une couche de transfert ionique, de très nombreuses solutions ont été proposées dont aucune toutefois n'a pu donner pleinement satisfaction à ce jour au moins pour les systèmes d'assez larges dimensions. Les premiers systèmes électrochromiques ont été développés avec une couche électrolytique liquide, par exemple constituée par une solution liquide d'acide fort. Outre qu'ils attaquent très rapidement les couches à leur contact, ces électrolytes liquides sont de plus d'une mise en oeuvre très délicate et nécessitent un soin tout particulier au niveau des joints d'étanchéité qui isolent le système. En pratique, ces électrolytes liquides ne sont utilisés que pour des systèmes de petites dimensions tels les systèmes d'affichage alphanumérique.

Des systèmes "tout solide" ont également été proposés que l'on peut classer en fonction de l'épaisseur d'électrolyte. Les électrolytes en couches épaisses, c'est à dire en couches d'une épaisseur généralement supérieure à 1 micron sont par exemple à base d'acides minéraux tels que l'acide uranylphosphorique. Des dispositifs similaires sont décrits par example dans US-A-4 573 768 et GB-A-2 005 856. Il a également été proposé d'utiliser des électrolytes liquides, notamment des sels de lithium noyés dans un milieu poreux, du type polymère. La principale difficulté rencontrée pour la mise en oeuvre de ces électrolytes en couches épaisses est l'apparition de zones de diffraction qui nuisent à la qualité optique du vitrage et le danger inhérent au produit utilisé, notamment au lithium de sorte qu'une exploitation à grande échelle de ce type de vitrages électrochromiques serait particulièrement onéreuse.

Enfin, il existe des systèmes "tout solide" fonctionnant avec une couche électrolytique mince de l'ordre de 150 Nanomètres. Citons dans cette catégorie les verres conducteurs ioniques et les couches électrolytiques très souvent utilisées constituées d'un diélectrique (silice ou fluorure de magnésium par exemple) dopé avec des molécules d'eau qui lui confèrent une conductivité protonique. Ces diélectriques sont déposés en couche mince sous vide, selon une technologie bien connue couramment utilisée pour l'obtention par exemple de vitrage à l'or ou à l'argent. Toutefois, il a été observé par la demanderesse que des discontinuités apparaissent dans l'épaisseur de la couche dès que la surface de dépôt dépasse par exemple 10 x 10 cm². Ces discontinuités, dues à la très fine épaisseur déposée, conduisent à la formation de "trous" qui entraînent alors des courts-circuits responsables d'une décharge interne du dispositif et d'une rapide décoloration spontanée du système.

Compte tenu des inconvénients cités ci-dessus, la demanderesse s'est proposée de réaliser des systèmes électrochromes pouvant fonctionner notamment en transmission et présentant une couche électrolytique continue, de mise en oeuvre relativement simple. Selon l'invention la couche électrolyte est une couche conductrice protonique formée par un polymère protonique conducteur à température ambiante.

L'invention a pour premier objet la définition de critères de sélection d'un polymère conducteur protonique susceptible d'être utilisé de façon satisfaisante dans un système électrochrome fonctionnant en transmission. De plus, la demanderesse a déterminé selon l'invention que l'utilisation d'un tel électrolyte ne permet pas d'employer tout type de couches électroconductrices et que celles-ci devaient également satisfaire des exigences précises.

Un système électrochrome selon l'invention comprend l'empilement suivant : un substrat transparent I de préférence en verre, une électrode transparente II, une couche de matériau électrochrome III, un électrolyte conducteur protonique IV constitué par un film d'un polymère organique, éventuellement une contre-électrode CE, une couche électroconductrice V et un substrat transparent VI. Le système est caractérisé en ce que la couche électrolytique IV est constituée par une solution solide anhydre d'acide phosphorique dans du poly(oxyéthylène) dont la conductivité 5 protonique est supérieure ou égale à 20°C à $10^{-5}$ Ohms$^{-1}$ cm$^{-1}$.

Le système électrochrome selon l'invention se caractérise ainsi par la nature de la couche électrolytique conductrice protonique et comme nous le verrons ultérieurement par la nature de la contre-électrode en contact avec ladite couche électrolytique.

Nous avons tout d'abord indiqué que cette couche électrolytique doit présenter pour une épaisseur inférieure à 50 micromètres - ce qui correspond aux épaisseurs des couches dites épaisseurs épaisses - une conductivité protonique au moins égale à 20°C à $10^{-5}$ Ohms$^{-1}$ cm$^{-1}$, cette conductivité assurant avec une rapidité suffisante le transfert des protons pour la formation du composé coloré de la couche de matériau électrochrome.

De plus, il est avantageux d'utiliser des polymères conducteurs protoniques filmogènes. On peut ainsi préparer dans les meilleures conditions des films à l'épaisseur souhaitée et le monter suivant les techniques usuelles pour la fabrication de vitrages feuilletés. Le film obtenu doit résister à une déchirure manuelle.

A ce caractère filmogène, doit s'ajouter de préférence un caractère plastique, apprécié indépendamment et qui permet d'assurer un meilleur contact de la couche électrolytique avec les autres couches du système électrochrome et les plaques-supports en verre. De préférence, cette plasticité est voisine de celle adoptée pour la couche plastique à base d'un élastomère PVB des vitrages feuilletés et est maintenue entre -20 et +60°C.

La couche électrolytique doit également présenter une bonne adhérence aux autres couches, notamment aux couches d'oxydes métalliques constituant le matériau électrochrome et les couches électro-conductrices. Généralement, cette propriété est satisfaite, la présence d'ions, notamment de protons, contribue à l'adhérence d'un polymère sur du verre ou autres oxydes.

De plus, le taux de cristallinité du polymère conducteur protonique doit être faible et ne pas évoluer sous l'effet du cham électrique ou du rayonnement solaire ; un affaiblissement maximum de 10 % de la transmission lumineuse est ainsi toléré pour un vitrage fonctionnant en transmission. En pratique, ceci est réalisé si la transmission lumineuse du film polymère est supérieure à 85%.

A titre de polymères conducteurs protoniques idoines à la mise en oeuvre de l'invention, conviennent plus particulièrement les complexes obtenus par addition d'un acide fort, dans une solution d'un polymère organique, pour obtenir un complexe formant une solution solide et plus spécialement un complexe acide phosphorique-poly(oxyéthylène).

Ce complexe est préparé dans des conditions rigoureusement anhydres et présente de ce fait un caractère oxydant avantageusement nettement moins élevé que le complexe acide phosphorique-polymère polyvinylique.

De préférence, l'acide phosphorique est ajouté à une concentration de 0,5 molécule par motif monomère oxyde d'éthylène, soit avec un rapport (O/H) du nombre d'atomes d'oxygène du polymère sur le nombre d'atomes d'hydrogène de l'acide compris entre 0,2 et 1 et de préférence égal à 0,66. Pour un tel rapport O/H, la conductivité protonique et la transparence optique sont avantageusement maximales.

De préférence encore, on utilise un poly(oxyéthylène) de masse moléculaire relativement élevée, comprise entre 1000000 et 5000000 et de préférence voisine de 5000000, ce qui minimise le nombre de groupes hydroxyles, facteurs de dégradation du polymère.

De tels polymères organiques électro-conducteurs permettent une réalisation simple de systèmes électrochromes à partir de deux feuilles de verre, présentant éventuellement une certaine courbure, munies d'un revêtement transparent électro-conducteur, l'une des feuilles de verre étant de plus pourvue d'une couche d'oxyde de tungstène déposée par exemple par pulvérisation cathodique assistée d'un champ magnétique l'assemblage des deux feuilles de verre et du polymère s'effectuant en autoclave, d'une manière connue pour la réalisation de vitrages feuilletés, notamment de pare-brise automobiles de sécurité.

Toutefois, la couche électroconductrice V ou éventuellement la couche contre-électrode CE en contact avec la couche électrolytique est soumise à une très forte oxydation. Ainsi, si on utilise une couche d'argent métallique on observe une altération rapide du métal, avec jaunissement de l'électrolyte, alors qu'une telle couche d'argent donne satisfaction avec un diélectrique pour électrolyte. Finalement, la coloration n'est plus homogène et le système devient progressivement inapte à un fonctionnement en transmission. Avec d'autres couches électroconductrices d'assez faible épaisseur, par exemple avec une couche conductrice transparente d'oxyde d'indium de 50 nanomètres déposée par pulvérisation cathodique magnétron selon une technique usuelle et présentant une résistance carrée de 200 Ohms, on observe un jaunissement entraînant une opacification complète du système ou pire une absence totale du phénomène de coloration.

Selon l'invention, la couche en contact avec l'électrolyte - c'est à dire la couche électroconductrice V ou éventuellement la contre-électrode CE doit avoir une certaine capacité d'insertion des protons, sans altération de la transmission lumineuse.

Des résultats satisfaisants sont obtenus avec une couche électroconductrice V formée d'oxyde métallique, relativement épaisse présentant une bonne conductibilité électrique, c'est à dire dont la résistance carrée est inférieure à 25 Ohms et de préférence à 8 Ohms, tout en conservant une grande transparence, soit avec un facteur de transmission lumineuse dans le visible supérieur à 82 %. Conviennent par exemple des couches de dioxyde d'étain dopées au fluor de plus de 350 nanomètres d'épaisseur ou mieux d'oxyde d'indium dopé à l'oxyde d'étain de plus de 100 nanomètres d'épaisseur, des couches dioxyde d'indium dopé par de l'oxyde d'étain de plus de 300 nanometres étant plus particulièrement préférées.

De préférence, la couche électroconductrice est déposée par pyrolyse de poudre de composés organiques d'indium et étain ou de composés d'étain en présence d'un agent dopant. Avantageusement, on opère par pyrolyse sur du verre à une température voisine de 600° C d'un mélange de poudres de formiate d'indium et d'au plus 30 % d'un composé d'étain qui effectue un dopage cationique de l'oxyde d'indium et favorise ainsi sa conductibilité électrique.

Les couches électroconductrices ainsi obtenues présentent une résistance carrée très faible qui peut encore être abaissée par un traitement thermique dans une atmosphère réductrice.

Pour obtenir une telle couche, on peut par exemple utiliser une poutre à base de formiate d'indium mélangée avec 4% en poids d'oxyde de dibutyl étain, distribuée sur un ruban de verre échauffé à 600°C et défilant à 18 m/s. Pour une épaisseur de 300 Nanomètres obtenue en adaptant un débit idoine de distribution de poudre on obtient une couche très légèrement verte en transmission dont la résistance carrée est de 25 Ohms et le facteur de transmission lumineuse 85,8 %.

De telles couches électroconductrices sont stables en la présence pourtant oxydante de la couche électrolytique. De plus, le système ainsi constitué n'est pas altéré après un grand nombre de cycles decoloration, coloration qui n'évolue pas même avec des cycles de plusieurs heures. Cette dernière propriété est très avantageuse pour la constitution de vitrages de bâtiment car il est alors souhaitable de pouvoir opacifier, ou respeetivement laisser une visibilité totale, pendant plusieurs heures.

Les résultats sont encore améliorés si, d'une manière particulièrement préférée, la couche électroconductrice subit un traitement thermique en milieu réducteur, par exemple par recuisson sous atmosphère d'azote ou encore par passage sous un brûleur alimenté par un mélange réducteur oxygène-hydrogène. Avec un tel traitement on abaisse la résistance carrée de la couche donnée ci-dessus en exemple jusqu'a 7,5 Ohms. La couche électroconductrice ainsi formée est encore moins dégradée par oxydation et permet de constituer des systèmes électrochromiques de plus longue durée. De plus, dans le cadre de la réalisation de systèmes électrochromes fonctionnant en transmission et de grandes dimensions telles celles de fenêtres par exemple, il a été observé qu'une très bonne conductibilité électrique était nécessaire afin d'obtenir une coloration homogène et rapide.

Une telle couche d'oxyde métallique, notamment d'oxyde d'indium est très avantageuse car elle permet la réalisation de vitrages très transparents en l'absence de coloration. Toutefois leur capacité d'insertion des protons est relativement moyenne aussi est-il avantageux de dissocier la fonction conduction électrique et la fonction insertion des protons en utilisant une contre-électrode CE dans un matériau capable d'insérer des protons tel le palladium et une couche électroconductrice V, symétrique de la couche II.

Les couches électroconductrices transparentes sont, par exemple, des couches conductrices d'oxyde d'indium et d'étain, de 300 nanomètres, déposées par pyrolyse de poudres, présentant une transmission lumineuse supérieure à 85 %. La couche de matériau électrochrome est une couche de 300 nanomètres d'oxyde de tungstène déposée par pulvérisation cathodique magnétron à partir d'une cible métallique en présence d'un mélange gazeux argon-oxygène.

D'autres systèmes électrochromes ont été préparés avec une couche électrolytique formée par un complexe poly(oxyéthylène)-acide phosphorique.

Dans des conditions rigoureusement anhydres, on dissout de l'acide phosphorique (2,25g) normapur et du poly(oxyéthylène) de masse moléculaire égale à 5000000 (densité 1,21 - température de transition -40°C - rapport O/H du nombre d'atomes d'oxygène du polymère sur le nombre d'atomes d'hydrogène de l'acide égal à 0,66), dans un solvant commun, par exemple un mélange 50-50 d'acétonitrile et de tétrahydro-furanne (75 millilitres). Après coulage sur une plaque de verre et évaporation de solvant, on obtient un film de 25 à 50 micromètres dont la conductivité à 20°C est de $9.10^{-5}$ Ohms$^{-1}$ cm$^{-1}$ et dont la transmission lumineuse est supérieure à 85 %. Cette solution solide peut être également préparée directement, en l'absence de solvant.

Notons qu'un tel polymère est transparent (et ne cristallise pas après quelques jours) pour un rapport O/H variant entre 0,2 et 1. Dans ces conditions, le polymère a en effet un caractère essentiellement amorphe. De plus, la conductivité protonique est supérieure à $10^{-5}$Ohm$^{-1}$cm$^{-1}$ pour un rapport O H compris entre 0,4 et 16. Conviennent donc selon l'invention, les polymères présentant un rapport O/H variant entre 0.4 et 1, la conductivité et la transparence étant maximales pour O/H=0,66.

La masse moléculaire du poly(oxyéthylène) est avantageusement choisie entre 1 000 000 et 5 000 000 Avec une masse moléculaire trop grande, la vitesse de cristallisation du polymère devient non négligeable et il perd alors sa transparence. Par contre, des chaînes courtes entraînent la prolifération des motifs hydroxyles de bout de chaîne, responsables de la dégradation du polymère.

On prépare alors des cellules électrochromes comportant successivement une plaque de verre (I), une couche électroconductrice (II), une couche d'oxyde de tungstène (III), un film de polymère conducteur protonique (IV) et, une couche électroconductrice (V) et une seconde plaque de verre (VI).

On utilise deux plaques de verre recouvertes d'une couche électroconductrice transparente.

La couche d'oxyde de trungstène (III) est déposée sur une de ces plaques par évaporation thermique ou pulvérisation cathodique.

La cellule est assemblée et scellée alors dans un autoclave La cellule est reliée à un générateur de tension et à des horloges définissant les temps de cycle coloration-décoloration.

On a tout d'abord fabriqué des cellules électrochromes d'environ 100 cm$^2$ comportant toutes une couche électroconductrice (I) formée d'oxyde d'indium, (résistance carrée : 5-6 Ohms une couche (III) de 315 nanomètres d'oxyde de tungstène et un film (IV) de 40 micromètres de poly(oxyéthylène). Les valeurs suivantes de transmission lumineuses ont été obtenues.

| Couche V : | Tension : | $T_{L\ MAX}$ | $T_{L\ MIN}$ |
|---|---|---|---|
| ITO (6-8 Ohms) | 2,5 Volts | 77 % | 35 % |
| ITO (6-8 Ohms) | 3 Volts | 78 % | 32 % |
| $S_nO_2$ (15 Ohms) | 2,75 Volts | 65,5 % | 41 % |

$T_L$ MAX représente la transmission lumineuse dans le visible du système en l'absence d'un champ électrique, $T_L$ MIN est la transmission lumineuse minimale obtenue après coloration.

Au delà de 3 Volts on atteint les limites du domaine de stabilité de l'électrolyte (qui se situe entre 1 et 3 Volts).

Pour une couche électroconductrice (V) dont la résistivité est faible, la coloration apparait pour une tension supérieure ou égale à 2,5 volt et le différentiel de transmission lumineuse est d'autant plus important que cette tension est élevée.

Avec une couche (V) relativement moins bonne conductrice, le différentiel de transmission lumineuse est beaucoup plus faible. De plus une tension de 2,75 volts est nécessaire pour qu'apparaisse le phénomène de coloration.

Ainsi, en travaillant avec des couches (V) très conductrices, on dispose avantageusement d'une coloration maximale plus intense, que l'on peut de plus faire varier en modifiant la tension appliquée.

L'intensité de la coloration dépend également de l'épaisseur de la couche de matériau électrochrome comme le montrent les tests ci-après effectués sur des cellules présentant les caractéristiques communes suivantes :
- couche électroconductrice (II) : oxyde d'indium dopé (résistance carrée 5-6 Ohms),
- couche matériau électrochrome (III) : oxyde de tungstène (épaisseur variable),
- couche électrolytique (IV) : polymère polyoxyde d'éthylène) 40 micromètres,

- couche électroconductrice (V) : oxyde d'indium dopé (résistance 6-8 Ohms),
- tension appliquée 3 volts,
- surface de l'échantillon 65-95 cm$^2$.

| Epaisseur WO$_3$ : | T$_E$ MAX | GAIN |
|---|---|---|
| 315 | 49,5 | − 28,4 |
| 380 | 49,2 | − 37,2 |
| 390 | 62,2 | − 42,5 |
| 720 | 57,2 | − 32,3 |

L'épaisseur d'oxyde de tungstène est donnée en Nanomètres. T$_E$ MAX indique (en %) la transmission énergétique maximale du système. Dans la troisième colonne on a indiqué le gain obtenu après coloration (valeur négative, la transmission énergétique après coloration étant bien entendu plus faible).

Le gain en transmission énergétique est particulièrement intéressant pour des vitrages fonctionnant en transmission ; il traduit en effet l'efficacité du vitrage du point de vue de la climatisation.

Entre 315 et 390 nanomètres, on observe un gain (en valeur absolue) de plus en plus important. Par contre, pour une épaisseur plus importante (720 nanomètres), il y a une limitation expliquée peut-être par une mauvaise conduction électronique. Les meilleurs résultats sont obtenus avec des couches d'oxyde de tungstène d'environ 350-400 nanomètres d'épaisseur.

De tels systèmes électrochromes fonctionnant en transmission sont utilisables pour des vitrages de bâtiment, la coloration, et son intensité proportionnées à l'intensité du champ électrique appliqué, étant commandée par exemple pièce par pièce ou à partir d'un capteur d'intensité du rayonnement solaire, pour un meilleur confort thermique.

Ces systèmes trouvent également une application dans le domaine des automobiles, notamment pour certains vitrages latéraux ou pour les lunettes arrières, ceci afin d'améliorer le confort thermique des passagers en période estivale. De plus en appliquant sur la face arrière du système (plaque de verre VI) une couche métallique, on obtient un rétroviseur nuit et jour.

Enfin, il est possible de réaliser des systèmes semi-transparents, utilisables notamment comme toits ouvrants automobiles. De tels systèmes sont avantageusement obtenus en intercalant entre la couche électrolytique (IV) et la couche conductrice transparente (V) une couche de palladium déposée par exemple par évaporation thermique. Avantageusement, le palladium permet d'abaisser la tension de coloration entre 1,5 et 2 Volts ce qui est proche de l'optimum de stabilité du poly (oxyde d'éthylène). Le palladium facilite en effet les transfers electroniques. De plus le palladium est un accepteur de proton et joue un rôle symétrique de celui de la couche de matériau électrochromique, mais sans se colorer.

Un système semi-réfléchissant a été réalisé suivant la technique indiquée précédemment avec l'empilement suivant :
- couche électroconductrice II : oxyde d'indium, résistance carrée 5-6 Ohms,
- matériau électrochrome III : oxyde de tungstène ; 300 nanomètres,
- couche électrolytique IV : poly(oxyéthylène) ; 40 micromètres,
- couche de palladium : 15 nanomètres,
- couche électroconductrice V : oxyde d'indium ; résistance carrée 6-8 Ohms.

La transmission lumineuse d'un tel système est de 15 %, en l'absence de coloration et pratiquement nulle après coloration. Les performances électriques restent inchangées après 250 cycles sous une tension de 1,5 Volt.

## Revendications

1. Vitrage à transmission lumineuse dans le visible variable comportant successivement : une plaque support transparente (I), une couche électroconductrice transparente (II), une couche de matériau électrochrome (III), une couche d'électrolyte (IV), une contre-électrode (CE), une couche électroconductrice (V), une plaque support transparente (VI), **caractérisé** en ce **que** ladite couche d'électrolyte (IV) est une solution solide anhydre d'acide phosphorique dans du poly(oxyéthylène) dont la conductivité protonique à 20°C est supérieure ou égale à 10$^{-5}$ Ohm$^{-1}$ cm$^{-1}$.

**2.** Vitrage selon la revendication 1, **caractérisé en ce que** ladite solution solide anhydre d'acide phosphorique dans du poly(oxyéthylène) est filmogène.

**3.** Vitrage selon l'une des revendications précédentes, **caractérisé en ce que** le facteur de transmission lumineuse dans le visible de ladite couche électrolytique est supérieur à 85 %.

**4.** Vitrage selon l'une des revendications précédentes, **caractérisé en ce que** le polymère est dans une phase essentiellement amorphe.

**5.** Vitrage selon l'une des revendications précédentes, **caractérisé en ce que** le rapport O/H du nombre d'atomes d'oxygène du polymère sur le nombre d'atomes d'hydrogène de l'acide est compris entre 0,4 et 1 et est de préférence égal à 0,66.

**6.** Vitrage selon l'une des revendications précédentes, **caractérisé en ce que** le poly(oxyéthylène) a une masse moléculaire comprise entre 1 000 000 et 5 000 000.

**7.** Vitrage selon l'une des revendications précédentes, **caractérisé en ce que** ladite solution solide est préparée dans des conditions rigoureusement anhydres par addition d'acide phosphorique et de poly(oxyéthylène) dans un solvant commun non aqueux.

**8.** Vitrage selon la revendication 7, **caractérisé en ce que** ledit solvant commun est un mélange d'acétonitrile et de tétrahydrofuranne.

**9.** Vitrage selon l'une des revendications précédentes, **caractérisé en ce que** les couches électroconductrices (II) et (V) ont une résistance carrée inférieure à 8 Ohms.

**10.** Vitrage selon la revendication 9, **caractérisé en ce que** la contre-électrode est une couche d'oxyde d'étain dopé en fluor d'une épaisseur supérieure à 350 nanomètres.

**11.** Vitrage selon la revendication 9, **caractérisé en ce que** la contre-électrode est une couche d'oxyde d'indium dopé à l'oxyde d'étain.

**12.** Vitrage selon l'une des revendications précédentes, **caractérisé par** une transmission lumineuse dans le visible variable entre 78 % et 32 %.

**13.** Vitrage selon l'une des revendications précédentes, **caractérisé en** ce que la contre-électrode (CE) est constituée par un matériau capable d'insérer des protons sans modification de transmission lumineuse.

**14.** Vitrage selon la revendication 13, **caractérisé en ce que** ledit matériau capable d'insérer des protons est du palladium.

**15.** Application du vitrage selon l'une des revendications précédentes à la réalisation d'un toit ouvrant pour un véhicule automobile.

**Patentansprüche**

**1.** Verglasung mit variablem Lichtdurchgang im sichtbaren Bereich, welche aufeinanderfolgend eine transparente Trägerplatte (I), eine transparente elektrisch leitende Schicht (II), eine Schicht (III) aus elektrochromem Material, eine Elektrolytschicht (IV), eine Gegenelektrode (CE), eine elektrisch leitende Schicht (V) und eine transparente Trägerplatte (VI) aufweist, dadurch gekennzeichnet, daß die Elektrolytschicht (IV) eine wasserfreie feste Lösung von Phosphorsäure in Poly(oxyethylen) ist, deren Protonenleitfähigkeit bei 20° C größer als oder gleich $10^{-5}$ Ohm $^{-1}$ cm$^{-1}$ ist und eine Dicke von weniger als 50 µm aufweist.

**2.** Verglasung nach Anspruch 1, dadurch gekennzeichnet, daß die wasserfreie feste Phosphorsäurelösung in Poly(oxyethylen) filmbildend ist.

3. Verglasung nach einem der vorstehenden Ansprüche, dadurch gekennzeichnet, daß der Lichtdurchgangsfaktor der Elektrolytschicht im sichtbaren Bereich größer als 85 % ist.

4. Verglasung nach einem der vorstehenden Ansprüche, dadurch gekennzeichnet, daß das Polymer in im wesentlichen amorpher Form vorliegt.

5. Verglasung nach einem der vorstehenden Ansprüche, dadurch gekennzeichnet, daß das O/H-Verhältnis der Sauerstoffatome des Polymers zu den Wasserstoffatomen der Säure zwischen 0,4 und 1 liegt und vorzugsweise 0,66 ist.

6. Verglasung nach einem der vorstehenden Ansprüche, dadurch gekennzeichnet, daß das Poly(oxyethylen) eine Molmasse zwischen 1 000 000 und 5 000 000 aufweist.

7. Verglasung nach einem der vorstehenden Ansprüche, dadurch gekennzeichnet, daß die feste Lösung unter rigoros wasserfreien Bedingungen durch Zugabe von Phosphorsäure und Poly(oxyethylen) zu einem gewöhnlichen nicht wäßrigen Lösungsmittel hergestellt wird.

8. Verglasung nach Anspruch 7, dadurch gekennzeichnet, daß das gewöhnliche Lösungsmittel eine Mischung aus Acetonitril und Tetrahydrofuran ist.

9. Verglasung nach einem der vorstehenden Ansprüche, dadurch gekennzeichnet, daß die elektrisch leitenden Schichten (II) und (V) einen Flächenwiderstand von weniger als 8 Ohm haben.

10. Verglasung nach Anspruch 9, dadurch gekennzeichnet, daß die Gegenelektrode eine mit Fluor dotierte Zinnoxidschicht einer Dicke von mehr als 350 nm ist.

11. Verglasung nach Anspruch 9, dadurch gekennzeichnet, daß die Gegenelektrode eine mit Zinnoxid dotierte Indiumoxidschicht ist.

12. Verglasung nach einem der vorstehenden Ansprüche, gekennzeichnet durch einen variablen Lichtdurchgang im sichtbaren Bereich zwischen 78 % und 32 %.

13. Verglasung nach einem der vorstehenden Ansprüche, dadurch gekennzeichnet, daß die Gegenelektrode (CE) von einem Material gebildet wird, das Protonen ohne Veränderung des Lichtdurchgangs einbringen kann.

14. Verglasung nach Anspruch 13, dadurch gekennzeichnet, daß das Material, das Protonen einbringen kann, Palladium ist.

15. Anwendung der Verglasung nach einem der vorstehenden Ansprüche zur Herstellung eines sich öffnenden Daches bei einem Kraftfahrzeug.


## Claims

1. Glazing with variable light transmission in the visible range, comprising successively : a transparent support plate (I), a transparent electrically conducting film (II), a film of electrochromic material (III), an electrolyte film (IV), a counter-electrode (CE), an electrically conducting film (V), a transparent support plate (VI),
characterized in that said electrolyte film (IV) is an anhydrous solid solution of phosphoric acid in polyoxyethylene, the protonic conductivity of which at 20° C is greater than or equal to $10^{-5}\,cm^{-1}$ and the thick-ness of which is less than 50 micrometres.

2. Glazing according to Claim 1, characterized in that said anhydrous solid solution of phosphoric acid in polyoxyethylene is film-forming.

3. Glazing according to one of the preceding Claims, characterized in that the light transmission factor in the visible range of said electrolyte film is greater than 85 %

4. Glazing according to one of the preceding Claims, characterized in that the polymer is in an essentially amorphous phase.

5. Glazing according to one of the preceding Claims, characterized in that the O/H ratio of the number of oxygen atoms of the polymer to the number of hydrogen atoms of the acid is from 0.4 to 1 and is preferably 0.66

6. Glazing according to one of the preceding Claims, characterized in that the polyoxyethylene has a molecular weight between 1,000,000 and 5,000,000

7. Glazing according to any one of the preceding Claims, characterized in that said solid solution is prepared in rigorously anhydrous conditions by addition of phosphoric acid and polyoxyethylene into a common non-aqueous solvent.

8. Glazing according to Claim 7, characterized in that said common solvent is a mixture of acetonitrile and tetrahydrofuran.

9. Glazing according to one of the preceding Claims, characterized in that the electrically conducting films (II) and (V) have a square resistance less than 8 Ohms.

10. Glazing according to Claim 9, characterized in that the counter-electrode is a film of tin oxide doped with fluorine having a thickness exceeding 350 nanometres.

11. Glazing according to Claim 9, characterized in that the counter-electrode is a film of indium oxide doped with tin oxide.

12. Glazing according to one of the preceding Claims, characterized by a light transmission in the visible range variable from 78 % to 32 %.

13. Glazing according to one of the preceding Claims, characterized in that the counter-electrode (CE) is composed of a material capable of inserting protons without modification to light transmission.

14. Glazing according to Claim 13, characterized in that said material capable of inserting protons is palladium.

15. Application of the glazing according to any one of the preceding Claims to the construction of an opening roof for an automobile vehicle.